# EUROPEAN PATENT SPECIFICATION

(11) **EP 3 135 871 B1**
(45) Date of publication and mention of the grant of the patent: **24.06.2020**
(21) Application number: 15182658.3
(22) Date of filing: 27.08.2015
(51) Int. Cl.: F01K 7/38, F01K 17/00

(54) **BACK-PRESSURE STEAM TURBINE AND A SYSTEM FOR COMBINED PRODUCTION OF ELECTRICAL AND THERMAL ENERGY**
GEGENDRUCKDAMPFTURBINE UND SYSTEM ZUR KOMBINIERTEN ERZEUGUNG VON ELEKTRISCHER UND THERMISCHER ENERGIE
TURBINE À VAPEUR DE CONTRE-PRESSION ET SYSTÈME DE PRODUCTION COMBINÉE D'ÉNERGIE ÉLECTRIQUE ET THERMIQUE

(43) Date of publication of application: 01.03.2017
(73) Proprietor: Doosan Skoda Power S.r.o., 30128 Plzen (CZ)
(72) Inventor: Kucera, Jiri, 312 00 Plzen (CZ); Duchek, Karel, deceased (CZ); Krejcik, Jaroslav, 326 00 Plzen (CZ)
(74) Representative: Musil, Dobroslav

(56) References cited:
- CN-B- 102 322 301
- CN-U- 204 283 508
- CN-U- 204 476 487
- US-A- 3 451 220

## Description

### Technical field

The invention relates to a back-pressure steam turbine which contains a combined unit with a high-pressure section, a middle-pressure section and a low-pressure section.

The invention also relates to a system for combined production of electrical and thermal energy, which utilizes this steam turbine.

### Background art

So far, several systems have been devised for the utilization of residual energetic potential of water steam coming out from a back-pressure steam turbine, the residual energy being used especially for warming-up the heating medium, most often water. Heat transfer between the steam and the heating water takes place in heat exchangers called "water heaters". In these water heaters on the steam side the steam is condensed, and, possibly, also the resulting condensate is undercooled, and on the heating water side the heating water is heated up. From the point of view of heat circulation, the water heater therefore fulfils the same function as a condenser of a condensing turbine.

In the simplest of the considered systems, the steam from the turbine outlet is fed directly to a water heater (see, e.g., the diagram in Fig. 9a in the publication by J.C. Franz: "STEAM TURBINES FOR DISTRICT HEATING APPLICATIONS", GEC ALSTHOM TECHNICAL REVIEW No. 10-1992). However, the disadvantage of this system is the fact that the required outlet temperature of the heating water directly affects the final pressure of the expansion of the steam turbine and, as a result, also the thermal efficiency of the cycle, which does not allow to utilize the full potential which the heating water could have as a cooling medium. Another drawback is also the fact that if the required difference between the inlet and outlet temperatures of the heating water is too high, the construction of the water heater is technologically rather difficult, namely especially due to the thermal expansion of used material.

In order to eliminate these disadvantages and to increase efficiency, a system of two-stage heating has been proposed (see e.g. the diagram in Fig. 9b in the publication by J.C. Franz: "STEAM TURBINES FOR DISTRICT HEATING APPLICATIONS", GEC ALSTHOM TECHNICAL REVIEW No. 10-1992). In this system the heating water is only pre-heated by the steam fed from the turbine outlet in the first (basic) stage of the water heater and to the required outlet temperature is heated by the extraction steam taken out of the turbine by extraction at a pressure which is higher than the pressure of the outlet steam. The final phase of heating is carried out in the second (top) stage of the water heater. The advantage of this arrangement is the fact that part of the steam can expand to a pressure which is lower than the condensation pressure which corresponds to the required final temperature of the heated heating water, which enhances the thermal efficiency of the cycle. So as to utilize effectively the full potential of the heating water as a cooling medium of the thermal cycle, it is necessary from the point of view of the theory of thermal cycles to distribute the heating process of the heating water evenly between both stages of water heater. However, the optimal operational point can only be achieved during the operation of the turbine according to its set point and any deviation causes imbalance and, consequently, results in decrease in the thermal efficiency of the cycle, thus decreasing also the electrical output.

These drawbacks have been overcome by the system with steam flowing through the so-called asymmetric two-stream low-pressure section of the turbine, wherein the outlet of each stream is connected to one stage of the water heater (see e.g. the diagram in Fig. 9c in the publication by J.C. Franz: "STEAM TURBINES FOR DISTRICT HEATING APPLICATIONS", GEC ALSTHOM TECHNICAL REVIEW No. 10-1992). The advantage of this system is the fact that the overall flow capacity due to two identical guide wheels at the inlet of each stream is divided into two streams having the same flow capacity at the very inlet of the low-pressure section, by which means optimal and even distribution of the flow for both water heaters is ensured in a wide range of operating modes. The disadvantage of this system, on the other hand, is doubling of number of low-pressure sections and especially the fact that a previous solution of a single-body turbine, which was economical as to the size as well as the costs, has to be replaced by a two-body turbine, because the asymmetric two-stream low-pressure section of the turbine is designed as a separate body. Therefore, the system is only used for machines with a large output (approx > 150 MW), where the advantages in terms of efficiency prevail over the disadvantages in terms of higher investment costs.

From CN 204283508 is known a steam turbine including a high-pressure cylinder, an intermediate pressure cylinder, a first low-pressure cylinder and a second low pressure cylinder, while a coupling is provided on the shaft between the first low-pressure cylinder and the second low-pressure cylinder. The first low pressure cylinder inlet and the second low pressure cylinder inlet are connected to common low pressure outlet of intermediate pressure cylinder by pipe which is equipped by a valve. This valve controls distribution of mass flow and pressure between first low pressure cylinder inlet and the second low pressure cylinder inlet. Main advantage of this solution is that, during cold season, the valve could be closed down and the second low-pressure cylinder could be completely closed down and detached from common shaft by disconnecting coupling. Consequently, saved portion of steam mass flow could be used for heating, instead of for production of electricity by means of the second low-pressure cylinder. This solution is very effective way how to optimize production of electricity during different seasons for large turbines with substantially constant heat energy input and substantially different electricity output during hot and cold seasons. Main disadvantages of this solution are that it is not economical to use this multi casing turbine concept for smaller size turbines up to 200 MW, and that the solution is not convenient for turbo generator unit, with is demanded to produce substantially same electricity output during different seasons.

The aim of the invention is to eliminate the drawbacks of the background art and to provide a back-pressure steam turbine and a system for combined production of electrical and thermal energy.

### Principle of the invention

The goal of the invention is achieved by a back-pressure steam turbine, which contains a combined unit with a high-pressure section, a middle-pressure section and a low-pressure section, whose principle consists in that an additional low-pressure unit is arranged behind the low-pressure section of the combined unit on the same shaft. The additional low-pressure unit is oriented in the direction of the steam flow and is separated from the low-pressure section of the combined unit by a dividing wall, whereby the inlet of the additional low-pressure section is interconnected with the outlet of the middle-pressure section of the combined unit, and the combined unit and the additional low-pressure unit are arranged in one body. This arrangement enables to utilize the whole potential of the heating water as a cooling medium of the thermal cycle, which applies to different operating modes. At the same time, in principle, this does not make the construction of the turbine more complicated, nor does it require a larger size of the turbine, and so this turbine can be designed as a single-body turbine.

The most suitable variant of the interconnection of the inlet of the additional low-pressure unit with the middle-pressure section of the combined unit is an interconnecting duct outside the turbine. In this interconnection the outer body of the turbine casing is provided with through holes for steam extraction from the outlet of the middle-pressure section of the combined unit, whereas on the opposite side of the outlets of the steam from the low-pressure of the combined unit it is provided with through holes for the inlet of the steam into the additional low-pressure unit, these through holes being interconnected by a duct formed between the outer surface of the outer body and the inner surface of the extensions surrounding the outlets of the steam from the low-pressure section of the combined unit and overlapping these holes.

The inlet of the additional low-pressure unit and the outlet of the middle-pressure section of the combined unit may be interconnected by steam pipelines, although that would mean extending the length of the turbine.

The dividing wall for pressure separation of the additional low-pressure unit and the low-pressure section of the combined unit is formed by a static partition through which the shaft of the turbine passes and which is sealed along the turbine shaft by a labyrinth shaft seal in order to prevent steam from leaking.

The goal of the invention is further achieved by a system for combined production of electrical and thermal energy, whose principle consists in that it contains a back-pressure steam turbine according to the invention, whereby an electric generator is connected to its shaft and the outlet of the low-pressure section of the combined unit and the outlet of its additional low-pressure unit are interconnected with a water heater.

In addition, both water heaters are included either in one heating system, wherein the water heater, connected to the outlet of the additional low-pressure unit of the turbine, is intended to pre-heat the heating water, or, as the case may be, another heating medium, and the water heater, interconnected with the outlet of the combined unit of the turbine to its subsequent heating to the required temperature, or each of them is included in a separate heating system.

### Description of drawings

In the enclosed drawing, Fig. 1 schematically represents a back-pressure steam turbine according to the invention, connected to the system for combined production of electrical and thermal energy, Fig. 2 schematically illustrates an advantageous variation of a duct for interconnecting the outlet of the middle-pressure section of the combined unit of the turbine with the inlet of the additional low-pressure unit of the turbine outside the turbine body, Fig. 3 illustrates a back-pressure steam turbine according to invention in second variant of embodiment with different connection to the system for combined production of electrical and thermal energy, and Fig. 4 illustrates a back-pressure steam turbine according to invention in the third variant of embodiment with another connection to the system for combined production of electrical and thermal energy.

### Specific description

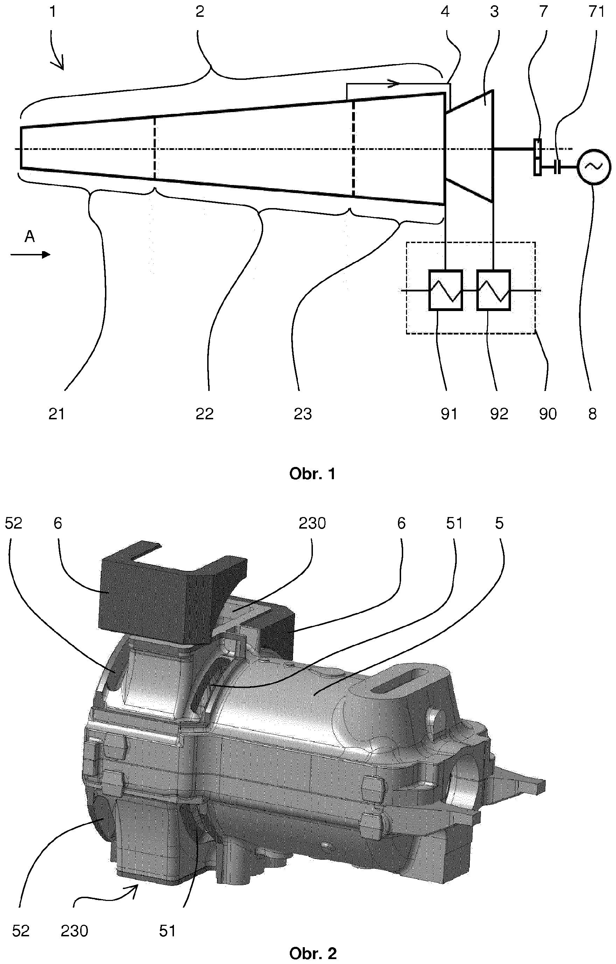

A back-pressure steam turbine **1** according to the invention, illustrated in Fig. 1, connected to a system for combined production of electrical and thermal energy, contains a combined unit **2** with a high-pressure section **21,** a middle-pressure section **22** and a low-pressure section **23,** whereby behind the low-pressure section **23** is arranged on the same shaft an additional one-stream low-pressure unit **3,** which is oriented in the direction of the steam flow (arrow **A**). Both units **2, 3** of the steam turbine **1** are arranged in one non-illustrated body and are pressure separated by a non-illustrated dividing wall, thus each of them forming a separate section through which the steam flows, whereby the inlet of the additional low-pressure section **3** and the outlet of the middle-pressure section **22** of the combined unit **2** are interconnected by a duct **4.** The **duct 4** may be realized as a steam pipeline which is preferably equipped with a non-illustrated valve which serves to regulate of the amount of the steam supplied or, as the case may be, it can be used to stop the supply of steam completely, or, more preferably, the duct is formed outside the body of the turbine **1** with a double casing, whose benefit is the fact that it does not extend the length of the turbine **1** and, in addition, it is well-suited for almost any input parameters of the steam.

The most suitable variation of this duct is illustrated in Fig. 2. The outer body **5** of the casing of the turbine **1** is provided with through holes **51** for releasing the steam from the outlet of the middle-pressure section **22** of the combined unit **2,** whereas on the opposite side of the outlet **230** of the steam from the low-pressure section **23** of the combined unit **2** it is provided with through holes **52** for introducing the steam to the inlet of the additional low-pressure unit **3.** These holes **51, 52** are interconnected by a **duct 4** formed between the outer surface of the outer body **5** and the inner surface of the tin extensions **6** (the lower extensions **6** are not shown in Fig. 2) surrounding the outlets **230** of the steam from the low-pressure section **23** of the combined unit **2** and overlapping these holes **51, 52.** Preferably, these extensions **6** are unreleasably connected to the outer body **5,** e.g., by welding.

The additional low-pressure unit **3** is composed of a standard single-casing construction and ensures post-expansion of the supplied steam flow from the pressure corresponding to point of distribution, that is from the pressure at the outlet of the middle-pressure section **22** of the combined unit **2,** to the pressure in the corresponding heater **92,** which is connected to the outlet of the additional low-pressure unit **3** (see Fig. 1). At the same time, the inlet of the additional low-pressure unit **3** is pressure separated from the outlet of the low-pressure section **23** of the combined unit **2** by a non-illustrated dividing wall, formed by a stationary partition resembling a non-bladed guide wheel, through the centre of which the shaft of the turbine **1** passes and which is along the shaft of the turbine **1** sealed by a contactless labyrinth shaft seal.

After this back-pressure single-body steam turbine **1** is connected to a system for combined production of electrical and thermal energy (Fig. 1), a standard electrical generator **8** is connected to its shaft directly or by means of a gear box **7** and a clutch **71,** whereby the outlets of the additional low-pressure section **3** and of the combined unit **2** are connected to the heater **91,** resp. **92** of the heating system **90.** The heater **92,** connected to the outlet of the additional low-pressure unit **3** of the turbine **1** is intended for pre-heating the heating water, or another heating medium, and the heater **91** connected to the outlet of the combined unit **2** of the turbine **1,** is intended for its subsequent heating to the required temperature.

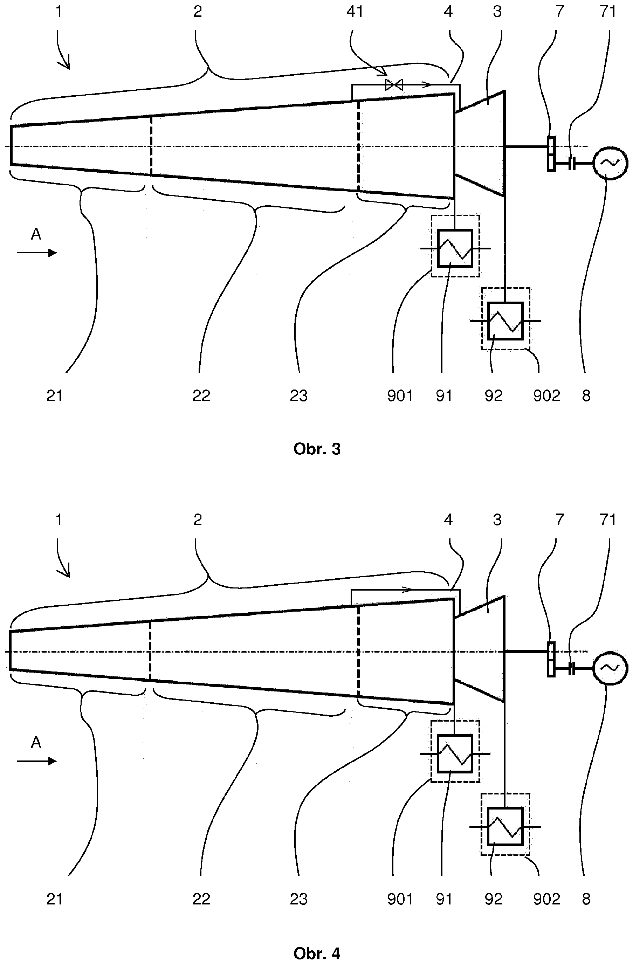

In embodiment illustrated in Fig. 3, each of hot water heaters **91, 92 is** connected to an independent heating system **901,** respectively **902.** The steam duct **4,** connecting inlet of additional low-pressure unit **3** to outlet of mediate-pressure section **22** of combined unit **2,** is equipped with valve **41,** which could regulate volume of admission steam flowing into low-pressure section **23** of combined unit **2** of the turbine **1,** and into additional low-pressure unit **3,** and, consequently, also into each of heaters **91, 92** and could adjust particular heating systems **901** and **902** according to changing requirements for operation. The valve **41** could be, in advantageous embodiment, operated by non-illustrated drive, e.g. an electric motor, or, alternatively, could be equipped by convenient mean for mechanical operation of the valve.

In embodiment illustrated in Fig. 4, each heater **91, 92** of hot water are also connected to an independent heating system **901,** respectively **902.** The steam duct **4,** connecting inlet of additional low-pressure unit **3** and outlet of middle-pressure section **22** of combined unit **2** is, with an advantage, a double casing structure (see Fig. 2), and volume of steam is regulated by means of non-illustrated regulating partition wall, which is arranged between combined unit **2** of back-pressure steam turbine **1** and additional low-pressure unit **3,** and which could regulate volume of inflow steam into low-pressure section **23** of combined unit **2** and into additional low-pressure unit **3** and, consequently, into heaters **91, 92** and in this way regulate heating systems **901, 902** according to changing operation requirements.

In non-illustrated variant of embodiment, similar regulation partition wall for steam inflow regulation is arranged between middle-pressure section and low-pressure section of combined unit **2** of back-pressure steam turbine **1.** In this variant, there could be achieved more effective regulation of volume of inflow steam flowing into low-pressure section of combined unit **2** and into additional low-pressure unit **3,** and, consequently, into individual heaters **91, 92,** and, respectively, into heating systems **901, 902.**

The advantage of this construction of the turbine **1** and the system for combined production of electrical and thermal energy, is the fact that similarly to the solution with asymmetric two-stream low-pressure unit, known from the background art, it utilizes the full potential which the heating water has as a cooling medium of the thermal cycle, this at different operating modes. At the same time, especially if the inlet of the additional low-pressure unit **3** and the outlet of the middle-pressure section **22** are interconnected by the duct **4** formed in the double casing of the turbine **1,** it does not substantially increase the size of the turbine **1,** nor does it cause any essential complications in the turbine construction, and so the turbine can be designed as a single-body turbine. Higher investments costs are then fully compensated by achieving higher efficiency.

Steam turbine **1** according to the invention could be designed with reaction or with impulse blading, whereas said impulse blading could be used in all sections **21, 22, 23** of all units **2, 3** of said turbine **1,** or, typically, only in high-pressure section **21** and, eventually, middle-pressure section **22** of combined unit **2.**

### List or referential marks

- 1: back-pressure steam turbine
- 2: combined unit
- 21: high-pressure section of combined unit
- 22: middle-pressure section of combined unit
- 23: low-pressure section of combined unit
- 230: outlet of the steam from the low-pressure section
- 3: additional low-pressure unit
- 4: duct
- 41: valve
- 5: outer body of the casing of the turbine
- 51: through holes
- 52: through holes
- 6: extensions
- 7: gear box
- 71: clutch
- 8: electrical generator
- 90: heating system
- 901: heating system
- 902: heating system
- 91: heater
- 92: heater
- A: direction of the steam flow

## Claims

1. A back-pressure steam turbine (1), which contains a combined unit (2) with a high-pressure section (21), a middle-pressure section (22) and a low-pressure section (23), whereas behind the combined unit (2) on the same shaft is arranged an additional low-pressure unit (3), whereby the inlet of steam to the additional low-pressure unit (3) is interconnected with the outlet of steam from the middle-pressure section (22) of the combined unit (2), **characterized in that,** the inlet of the additional low-pressure unit (3) is pressure separated from the outlet of the low-pressure section (23) of the combined unit (2) by a dividing wall, formed by a stationary partition resembling a non-bladed guide wheel, through the centre of which the shaft of the turbine (1) passes and which is along the shaft of the turbine (1) sealed by a contactless labyrinth shaft seal, wherein the combined unit (2) and the additional low-pressure unit (3) together with the dividing wall are arranged on one common shaft and positioned inside one common turbine casing, wherein the low-pressure section (23) and the additional low pressure unit (3) are both one-stream.

2. The back-pressure turbine (1) according to claim 1 wherein the inlet of the additional low-pressure unit (3) and the outlet of the middle-pressure section (22) of the combined unit (2) are interconnected outside the body of the turbine (1) by a duct (4) formed in a double turbine casing (1), wherein the outer body (5) of the turbine casing (1) is provided with through holes (51) for steam extraction from the outlet of the middle-pressure section (22) of the combined unit (2), and on the opposite side of the outlets (230) of the steam from the low-pressure section (23) of the combined unit (2) it is provided with through holes (52) for feeding the steam into the inlet of the additional low-pressure unit (3), these holes being interconnected by a duct (4) formed between the outer surface of the outer body (5) and the inner surface of extensions (6) surrounding the outlets (230) of the steam from the low-pressure section (23) of the combined unit (2) and overlapping these holes (51, 52).

3. The back-pressure steam turbine (1) according to claim 1, wherein the inlet of the additional low-pressure unit (3) and the outlet of the middle-pressure section (22) of the combined unit (2) are interconnected by duct (4) designed as steam pipes.

4. The back-pressure steam turbine (1) according to claim 2 or 3, wherein the duct (4) is equipped with a valve (41).

5. A system for combined production of electrical and thermal energy wherein it contains a back-pressure steam turbine (1) according to any of claims 1 to 4, to whose shaft is connected an electric generator (8), wherein both the outlet of the low-pressure section (23) of its combined unit (2) and the outlet of its additional low-pressure unit (3) are interconnected to a heater (91, 92) of the heating water.

6. The system according to claim 5, wherein the heaters (91, 92) of the heating water are part of one heating system (9) whereby the heater (92), connected to the outlet of the additional low-pressure unit (3) of the turbine (1) is intended for pre-heating the heating water, or another heating medium, and the heater (91) connected to the outlet of the combined unit (2) of the turbine (1), is intended for its subsequent heating to the required temperature.

7. The system according to claim 5, wherein each of the heaters (91, 92) of the heating water is a part of a separate heating system (90).

## Patentansprüche

1. Gegendruckdampfturbine (1), die einen kombinierten Teil (2) mit einem Hochdruckteil (21), Mitteldruckteil (22) und Niederdruckteil (23) aufweist, wobei hinter einem kombinierten Teil (2) auf derselben Welle ein zusätzlicher Einstromniederdruckteil (3) angeordnet ist, wobei ein Dampfeintritt in einen zusätzlichen Niederdruckteil (3) mit einem Dampfaustritt aus einem Mitteldruckteil (22) eines kombinierten Teils (2) verkoppelt ist, **dadurch gekennzeichnet, dass** ein Eintritt eines zusätzlichen Niederdruckteils (3) von einem Austritt eines Niederdruckteils (23) eines kombinierten Teils (2) durch eine Trennwand druckgetrennt ist, die durch eine statische Trennzwischenwand gebildet wird, die an ein Führungsrad ohne Schaufeln erinnert, deren Mitte eine Welle einer Turbine (1) durchgeht und die mit der Welle der Turbine (1) durch eine Labyrinthwellenstopfbüchse berührungslos abgedichtet ist, wobei der kombinierte Teil (2) und der zusätzliche Niederdruckteil (3) gemeinsam mit der Trennzwischenwand auf einer gemeinsamen Welle angeordnet sind und in einem gemeinsamen Körper gelagert sind, wobei der Niederdruckteil (23) und der zusätzliche Niederdruckteil (3) beide einströmig sind.

2. Gegendruckdampfturbine (1) nach dem Anspruch 1, wobei ein Eintritt eines zusätzlichen Niederdruckteils (3) mit einem Austritt eines Mitteldruckteils (22) eines kombinierten Teils (2) außerhalb eines Körpers einer Turbine (1) durch eine Leitung (4) verkoppelt ist, die in einem doppelten Mantel der Turbine (1) gebildet ist, wann der Außenkörper (5) eines Mantels der Turbine (1) die Durchgangsöffnungen (51) zur Hinausführung eines Dampfes aus einem Austritt der Mitteldruckstufe (22) des kombinierten Teils (2) und auf der anderen Seite der Austritte (230) eines Dampfes aus einem Niederdruckteil (23) des kombinierten Teils (2) die Durchgangsöffnungen (52) zur Hineinführung eines Dampfes auf einen Eintritt des zusätzlichen Niederdruckteils (3) aufweist, die durch eine Leitung (4) verkoppelt sind, die zwischen der Außenoberfläche des Außenkörpers (5) und der inneren Oberfläche der Aufbauten (6) gebildet ist, die die Austritte (230) eines Dampfes aus einem Niederdruckteil (23) eines kombinierten Teils (2) umschließen und diese Öffnungen (51, 52) überdecken.

3. Gegendruckdampfturbine (1) nach dem Anspruch 1, wobei ein Eintritt eines zusätzlichen Niederdruckteils (3) mit einem Austritt eines Mitteldruckteils (22) eines kombinierten Teils (2) durch eine Leitung (4) verkoppelt ist, die durch eine Dampfrohrleitung gebildet wird.

4. Gegendruckdampfturbine (1) nach dem Anspruch 2 oder 3, wobei eine Leitung (4) ein Ventil (41) aufweist.

5. System zur kombinierten Produktion einer elektrischen Energie und einer Wärmeenergie, das eine Gegendruckdampfturbine (1) nach einem der Ansprüche 1 bis 4 aufweist, an deren Welle ein elektrischer Generator (8) angeschlossen ist, wobei ein Austritt aus einem Niederdruckteil (23) von ihrem kombinierten Teil (2) und ein Austritt aus ihrem zusätzlichen Niederdruckteil (3) jeder mit einem Heizwassererhitzer (91, 92) verkoppelt sind.

6. System nach dem Anspruch 5, wobei die Heizwassererhitzer (91, 22) in einem Heizsystem (9) eingegliedert sind, wobei der mit einem Austritt aus einem zusätzlichen Niederdruckteil (3) einer Turbine (1) verkoppelte Erhitzer (92) zur Vorerwärmung eines Heizwassers, bzw. eines anderen Heizmediums bestimmt ist, und der mit einem Austritt aus einem kombinierten Teil (2) einer Turbine (1) verkoppelte Erhitzer (91) zu seiner nachfolgenden zusätzlichen Erwärmung auf eine Soll-Temperatur bestimmt ist.

7. System nach dem Anspruch 5, wobei jeder der Heizwassererhitzer (91, 92) in einem selbständigen Heizsystem (90) eingegliedert ist.

## Revendications

1. Turbine vapeur à contre-pression (1) qui contient une pièce combinée (2) avec une partie à haute pression (21), une partie à moyenne pression (22) et une partie à basse pression (23), tandis que derrière la pièce combinée (2) est rangée sur le même arbre la pièce auxiliaire à basse pression à flux unique (3), tandis que l'entrée de la vapeur dans la pièce auxiliaire à basse pression (3) est connectée à la sortie de la vapeur de la partie à moyenne pression (22) de la pièce combinée (2), **caractérisée en ce que** l'entrée de la pièce auxiliaire à basse pression (3) est séparée par pression de la sortie de la partie à basse pression (23) de la pièce combinée (2) par une paroi de séparation constituée d'une cloison statique semblable à une roue de distribution sans aubes, dont le centre est traversé par l'arbre de la turbine (1) et qui est maintenue étanche par rapport à l'arbre de la turbine (1) sans contact directe à l'aide d'un joint labyrinthe d'étanchéité d'arbre, tandis que la pièce combinée (2) et la pièce auxiliaire à basse pression (3) sont rangées, avec la paroi de séparation, sur un arbre commun et déposées dans un corps commun, tandis que la partie à basse pression (23) et la pièce auxiliaire à basse pression (3) sont toutes les deux à flux unique.

2. Turbine vapeur à contre-pression (1) selon la revendication 1, tandis que l'entrée de la pièce auxiliaire à basse pression (3) est connectée à la sortie de la partie à moyenne pression (22) de la pièce combinée (2) à l'extérieur du corps de la turbine (1) à l'aide d'une conduite (4) dans l'enveloppe double de la turbine (1), où le corps extérieur (5) de l'enveloppe de la turbine (1) est muni d'ouvertures de passage (51) permettant l'évacuation de la vapeur de la sortie à moyenne pression (22) de la pièce combinée (2) et, sur le côté opposé des sorties (230) de la vapeur de la partie à basse pression (23) de la pièce combinée (2) par les ouvertures de passage (52) pour introduction de la vapeur à l'entrée de la pièce auxiliaire à basse pression (3), connectées par la conduite (4) créée entre la surface extérieure du corps extérieure (5) et la surface intérieure des superstructures (6) qui entourent les sorties (230) de la vapeur de la partie à basse pression (23) de la pièce combinée (2) et recouvrent ces ouvertures (51, 52).

3. Turbine vapeur à contre-pression (1) selon la revendication 1, tandis que l'entrée de la pièce auxiliaire à basse pression (3) est connectée à la sortie de la partie à moyenne pression (22) de la pièce combinée (2) par une conduite (4) formée de tuyaux vapeur.

4. Turbine vapeur à contre-pression (1) selon les revendications 2 ou 3, tandis que la conduite (4) est munie d'une soupape (41).

5. Système de production combinée de l'énergie électrique et thermique formé de turbine vapeur à contre-pression (1) selon l'une des revendications de 1 à 4, dont l'arbre est connecté à un générateur électrique (8), tandis que la sortie de la partie à basse pression (23) de sa pièce combinée (2) et la sortie de sa pièce auxiliaire à basse pression (3) sont chacune connectées à un réchauffeur (91, 92) de l'eau de chauffage.

6. Système selon revendication 5, tandis que les réchauffeurs (91, 22) de l'eau de chauffage sont intégrés dans un seul système de chauffage (9), tandis que le réchauffeur (92) connecté à la sortie de la pièce auxiliaire à basse pression (3) de la turbine (1) est destiné au préchauffage de l'eau de chauffage, éventuellement d'un autre médium de transfert de chaleur, et le réchauffeur (91) connecté à la sortie de la pièce combinée (2) de la turbine (1) est destiné à son réchauffage pour obtenir la température désirée.

7. Système selon la revendication 5, tandis que chacun des réchauffeurs (91, 92) de l'eau de chauffage est intégré dans un système de chauffage indépendant (90).
